# EUROPEAN PATENT SPECIFICATION

(11) **EP 0 522 758 B1**
(45) Date of publication and mention of the grant of the patent: **27.05.1998**
(21) Application number: 92305949.7
(22) Date of filing: 29.06.1992
(51) Int. Cl.: C08J 5/18, C08L 67/02

(54) **Surface-roughened film and method for fabricating thereof**
Film mit aufgerauhter Oberfläche und Verfahren zu seiner Herstellung
Film à surface rugueuse et procédé pour sa préparation

(30) Priority: 02.07.1991 JP 186950/91; 24.09.1991 JP 272000/91; 18.04.1992 JP 125614/92
(43) Date of publication of application: 13.01.1993
(73) Proprietor: UNITIKA LTD., Amagasaki-shi Hyogo (JP)
(72) Inventor: Yamamoto, Eiji, 23, Ujikozakura, Uji Kyoto (JP); Tamura, Tsuneo, 23, Ujikozakura, Uji Kyoto (JP); Touma, Katsuyuki, 23, Ujikozakura, Uji Kyoto (JP); Kishida, Minoru, 23, Ujikozakura, Uji Kyoto (JP); Kozuka, Yoshiaki, 23, Ujikozakura, Uji Kyoto (JP); Matsuda, Hiroyuki, 23, Ujikozakura, Uji Kyoto (JP); Ohnishi, Hayami, 23, Ujikozakura, Uji Kyoto (JP); Menjyu, Akira, 31-3, Ujihinojiri, Uji, Kyoto (JP); Nishimoto, Shouji, 31-3, Ujihinojiri, Uji, Kyoto (JP)
(74) Representative: Cresswell, Thomas Anthony

(56) References cited:
- EP-A- 0 203 604
- EP-A- 0 312 616
- EP-A- 0 398 075
- Section Ch, Week 8818, 28 March 1988 Derwent Publications Ltd., London, GB; Class A23, AN 88-123730 & JP-A-63 068 659

## Description

This invention relates to a surface-roughened film and methods for fabricating such a film. The surface-roughened film has good transparency/exceptional clarity and high lubricity so that it is useful for a photoengraving material, a label, a packaging film, a magnetic recording film, and a clear film.

A polyester film comprising polyethylene terephthalate exhibits exceptional physical and chemical properties, so that it can be used in various products such as magnetic recording materials, wrapping materials, electrical materials, sensitized materials, and photographic materials.

For example, it is well known that polyester films dominate the market share in the magnetic tape industry. The lubricity (slip characteristics) of the film significantly affects operation of the manufacturing process and successful working of the films which, in turn, affects the quality of intermediate or end products.

In order to obtain this lubricity, the method generally employed comprises the prior incorporation of particulate inorganic compounds into a polymer to generate irregularity on the surface by means of drawing. Such a technique is proposed in, for example JP-A-63/137927, but it is difficult to disperse fine particles uniformly because the particulate inorganic compounds tend to aggregate or agglomerate with each other. Other techniques are disclosed in, for example JP-A-63-66222, wherein the particulate inorganic compounds are added to the polymer on polymerization.

Recently, transparent films have been in great demand. Higher transparency is required for polyester films which are "thick-walled", i.e. they have a film thickness in the range of 50 to 200 µm and are used in microfilms, electrophotographs, X-ray photographs, diazo prints, slidefilms (filmstrip) for overhead projectors (OHP), labels and laminated films. This is because thick film absorbs and scatters more light than a thin film such that transparency is degraded. Nevertheless, thick-walled films of high transparency have been commercially available.

However, as described below, such films are not easy to handle. More particularly, films are generally fabricated in various steps such as drawing, rolling, slitting, and working before they can be used as end products. Troublesome handling in these steps results in defective end products. In order to facilitate this handling, particulate inert materials of inorganic compound are usually incorporated into the film to cause adequate irregularity on the film surface and thereby prevent blocking of the films. In addition, the incorporation of such particles contributes to a proper lubricity between films and, in turn, to preventing difficulties associated with the rolling-up of films used as intermediates or end products. The above-mentioned lubricity of the film can be improved by increasing the volume of added particles, although this has the disadvantage that the resulting lower transparency of the film will cause some loss of desired optical characteristics and visual appearance of the film.

It is thus necessary, to increase the desired transparency of the film, to reduce the volume of the added particulate inert inorganic compound. This in turn results in lower lubricity of the film and causes handling difficulties in various steps. One example of such handling difficulties is that small protuberances are generated on the film surface of a rolled film upon rolling up the films after drawing. Excessive generation of such protuberances may not only affect the appearance of the film but also cause considerable damage to the film when used in industries where precision and accuracy for the film transparency are required. Examples include optical, photographic and graphical purposes. It is consequently difficult to satisfy both transparency and lubricity, which are the antipodal properties of the film.

In addition, in the above-mentioned method where particulate inert materials of an inorganic compound are added the film productivity is exceedingly low owing to screen clogging by the inorganic particles in the filtering process on melt film formation. However, a screen having a larger mesh size may allow foreign matter to be incorporated into the film, which is disadvantageous in that such a film is often broken down on drawing. Further, even a small amount of added inorganic particles may cause wearing of a T-die lip or a T-die blade if melt film formation lasts for a long time. A solution to this problem has long been desired. The incorporated particles also affect the lifetime of a knife used in slitting or other cutting process of the film. An exceedingly short-wearing knife will require frequent replacement and reduce productivity. In addition, a film which includes additives or foreign matter is disadvantageous when used for a magnetic tape or other magnetic recording media, because the incorporated particles may wear out the head of a recorder.

Most approaches to the above-mentioned "thick-walled film" have involved a compromise between film transparency and lubricity rather than optimising both together. For example, one compromise solution is to control highly the processing conditions with expensive plant investment and to reduce processing speeds or take-up speeds.

However, it would also be highly desirable for a thick-walled transparent film to possess both transparency and lubricity without the need for any improvement in the device for fabricating such a film, particularly in view of the need to increase processing speeds and to improve productivity.

In view of the above-mentioned problems, an object of the present invention is to provide a polyester film having good transparency and clarity and high lubricity.

Accordingly, the present invention provides a surface-roughened film of a composition (I) containing 96.9 to 99.9899 wt. % of a thermoplastic polyester resin (a), 0.01 to 3 wt. % of a thermoplastic resin (b) which is an amorphous nylon, an amorphous polyolefin or a maleimide copolymeric resin and which has a glass transition temperature higher than that of said thermoplastic polyester resin (a), a critical surface tension which differs by more than 0.1 dyne/cm from that of said thermoplastic polyester resin (a), a melt viscosity at a temperature of 280°C and shear rate of 10² sec⁻¹, of 50 to 5000 Pas (500 to 50,000 poise), and 0.0001 to 0.1 wt. % of particles of an inorganic compound (c) having an average particle size of 0.2 to 4.0 µm, said film having microprotuberances cored with said thermoplastic resin (b) on a surface of said film.

Preferably, the three dimensional center plane average roughness (SRa) of the surface-roughened film is from 0.007 to 0.07 µm, and the three dimensional ten point average roughness (SRz) is from 0.1 to 0.5 µm.

It is preferable that a refractive index of the thermoplastic resin (b) is from 1.45 to 1.68 and mean dispersed particle size is from 0.01 to 1.0 µm.

The present invention further provides a method for fabricating a surface-roughened film drawing which comprises drawing an undrawn film of a composition (I) as defined above by at least one and a half times in at least one direction at a temperature between the glass transition temperatures of the resins (a) and (b).

The composition of the thermoplastic polyester resins of the present invention is based on a combination of mixed residues of aromatic dicarboxylic acids, aliphatic diols and/or alicyclic diols.

The following are examples of the aromatic dicarboxylic acid: 1,4-benzenedicarboxylic acid (terephthalic acid), 1,3-benzenedicarboxylic acid (isophthalic acid), and naphthalene dicarboxylic acid. The aromatic rings of these aromatic dicarboxylic acids may be substituted by halogen, alkyl or other substituents.

The following are examples of the aliphatic diol and/or alicyclic diol: 1,2-ethanediol (ethylene glycol), bis(2-hydroxyethyl) ether (diethylene glycol), 1,2-propanediol (propylene glycol), 1,3-butanediol (butylene glycol), 2,2-dimethyl-1,3-propanediol (neopentyl glycol), and cyclohexylene dimethanol. It is possible to contain two or more of combined aliphatic ,diol and/or alicyclic diol.

The following are examples of the thermoplastic polyester resin (a): polyethylene terephthalate(PET), polybutylene terephthalate (PBT), polyethylene-2,6-naphthalate (PEN), poly-1,4-cyclohexylene dimethylene terephthalate (PCT) and poly-p-ethylene oxybensoate (PEOB). These resins satisfy requirements for the polyester resin for films in an economic and efficient manner. It is noted that a glass transition temperature (hereinafter, referred as Tg) of the thermoplastic polyester resin (a), which is important relative to Tg of the thermoplastic resin (b), can be measured by means of a differential scanning colorimetry (DSC) technique. The value of this glass transition temperature is generally 70°C for the PET, 50°C for the PBT, 120°C for the PEN, 95°C for the PCT, and 60°C for the PEOB. It is readily understood that other components may be incorporated into these thermoplastic polyester resin as a copolymerized components to such a degree that the film formation is not interfered. It is also readily understood that the thermoplastic polyester resin (a) may be formed with a composition of PET and the thermoplastic polyester resin (a) other than PET.

There is no restriction on the molecular weight of the thermoplastic polyester resin (a) used in the present invention ; the only requirement is that it be able to form a film. However, it is preferable that the intrinsic viscosity thereof is not less than 0.4(dl/g), measured at a temperature of 25°C when dissolved in a mixed solvent of phenol/tetrachloroethane in a weight ratio of 1.1.

The thermoplastic resin (b) used in the present invention has a Tg higher than that of the thermoplastic polyester resin (a) and a critical surface tension which differs by more than 0.1 dyne/cm from that of the thermoplastic polyester resin (a). The Tg and critical surface tension values are determined so as to satisfy the following requirements. A Composition is formed by the thermoplastic polyester resin (a) as a matrix component (continuous phase) and the thermoplastic resin (b) as an island component (dispersed phase) as a result of a molten mixture of the thermoplastic polyester resin (a) and the thermoplastic resin (b). This mixture is extruded in the form of a film and then drawn into a surface-roughened film. The present invention will not be achieved when the critical surface tension of the thermoplastic resin (b) is equal or approximately equal to that of the thermoplastic polyester resin (a) because of the compatibility between the thermoplastic polyester resin (a) and the thermoplastic resin (b). In addition, when the Tg of the thermoplastic resin (b) is lower than that of the thermoplastic polyester resin (a) the thermoplastic resin (b) is deformed into a smooth plane when the thermoplastic polyester resin (a) is drawn. This means that the thermoplastic resin (b) is hindered by being cored (i.e. the island components of the thermoplastic resin (b) are formed as a core in the thermoplastic polyester resin (a) because of non-compatibility therebetween) and the desired micro-protuberances on the film surface are not generated. There is more than 0.1 dyne/cm difference in the critical surface tensions of the thermoplastic polyester resin (a) and the thermoplastic resin (b), more preferably more than 0.5 dyne/cm. Tg of the thermoplastic polyester resin (a) is preferably 10°C higher than, and more preferably 20°C higher than, Tg of the thermoplastic resin (b).

It is necessary that the melt viscosity of the thermoplastic resin (b) at a temperature of 280°C and a shear rare of 10²sec⁻¹ is from 50 to 5000 Pas (500 to 50,000 poise). It is preferably from 100 to 3000 Pas (1,000 to 30,000 poise). When the melt viscosity is lower than 50 Pas (500 poise), then smaller particles of the thermoplastic resin (b) are dispersed in the matrix of the thermoplastic polyester resin (a), which results in insufficient lubricity of the film. On the other hand, when the melt viscosity is higher than 5000 Pas (50,000 poise), then larger particles of the thermoplastic resin (b) are generated resulting in insufficient transparency of the film. The refractive index of the thermoplastic resin (b) is preferably from 1.45 to 1.68. A film with a refractive index of less than 1.45 exhibits insufficient transparency. The transparency is improved as the refractive index approaches 1.68. A refractive index of more than 1.68 may be applicable while the thermoplastic resin having a viscosity of more than 1.68 is not readily available. In the surface-roughened film of the present invention, the thermoplastic resin (b) of the island component is dispersed in the thermoplastic polyester resin (a) of the matrix component. In this event, it is preferable that the thermoplastic resin (b) is dispersed in the form of approximately spherical particles. Preferably, the average dispersion particle size is from 0.005 to 2.0 µm, more preferably from 0.01 to 1.0 µm.

In the surface-roughened film according to the present invention, the micro-protuberances are generated on the surface of the film with the thermoplastic resin (b) being cored therein when particulate inert materials of the inorganic compound (c) are not present. Preferably, the surface roughness of the film is from 0.001 to 0.1 µm, more preferably from 0.005 to 0.05 µm, measured by the three dimensional center plane average roughness (SRa), and from 0.01 to 0.8 µm, more preferably from 0.06 to 0.4 µm, measured by the three dimensional ten point average roughness (SRz). The lubricity of the film is not sufficient when the SRa is smaller than 0.001 µm and the SRz is smaller than 0.01 µm, while the transparency of the film is not sufficient when the SRa is larger than 0.1 µm and the SRz is larger than 0.8 µm. It is noted that SRa represents the mean distance of the peak and valley from the center plane where the total area of the island is equal to that of the matrix on the film surface. SRz represents the distance between the average of first to fifth highest peaks and the average of first to fifth deepest valleys.

The thermoplastic resin (b) used in the present invention is an amorphous polyolefin, a maleimide copolymer resin or amorphous nylon.

Examples of the amorphous nylon include polyamides which contain, as copolymerized components, 5-tert-butyl 1,3-benzenedicarboxylic acid (5-tert-butyl isophthalic acid),
1,3-trimethyl-3-phenylindan-3',5-dicarboxylic acid,
3-aminomethyl-3,5,5-trimethyl-cyclohexylamine,
1,3-diaminocyclohexane,
m-xylylendiamine,
1,3-bis(aminomethyl) cyclohexane,
2,4,4-trimethyl hexamethylenediamine,
bis(4-aminocyclohexyl) methane,
bis(4-amino-3-methylcyclohexyl)methane.

Such polyamides can be obtained by means of well-known polycondensation technique in combination with polyamide forming components such as
1,2-diaminoethane(ethylenediamine),
1,4-diaminobutane(tetramethylenediamine),
1,6-diaminohexane(hexamethylenediamine),
phenylenediamine,
hexanedioic acid(adipic acid),
decanedioic acid(sebacic acid),
cyclohexanedicarboxylic acid,
1,3-benzenedicarboxylic acid(isophthalic acid),
1,2-benzenedicarboxylic acid(phthalic acid),
1,4-benzenedicarboxylic acid (terephthalic acid),
naphthalenedicarboxylic acid,
ε-aminocaproic acid,
ω-aminododecanoic acid,
aminobenzoic acid,
ε-caprolactam and ω-laulolactam.

Preferably, Tg of the amorphous nylon is at least 10°C higher than, and more preferably, at least 20°C higher than Tg of the thermoplastic polyester resin (a). The surface-roughening may be more effectively made with the higher Tg. However, it is preferable that Tg is not higher than 200°C with respect to processability on melt molding.

The maleimide copolymeric resin used in the present invention contains groups of monomers of maleimide and aromatic vinyls, and if necessary also contains unsaturated dicarboxylic anhydride monomers and other copolymerizable monomers.

The following are examples of monomers of such maleimides:
maleimide,
N-methylmaleimide,
N-ethylmaleimide,
N-propylmaleimide,
N-hexylmaleimide,
N-cyclohexylmaleimide,
N-phenylmaleimide,
N-tolylmaleimide,
N-(phenylhalide)maleimide,
N-(alkyl phenyl)maleimide,
N-(nitrophenyl)maleimide,
N-(hydroxyphenyl)maleimide,
N-naphthylmaleimide,
α-chloro-N-phenylmaleimide, and α-methyl-N-phenylmaleimide.

The following are examples of aromatic vinyl monomers: styrene, α-methylstyrene, vinyltoluene, t-butyl stylene, and stylene halide.

The following are examples of unsaturated dicarboxylic anhydride monomers: maleic anhydride (2,5-furandione), methyl maleic anhydride, 1,2-dimethyl maleic anhydride, ethyl maleic anhydride, and phenyl maleic anhydride.

Other suitable copolymerizable monomers include acrylic monomer such as: methylacrylate, methylmethacrylate, ethylacrylate, ethylmethacrylate, butylacrylate, butylmethacrylate, hexylacrylate, hexylmethacrylate, cyclohexylacrylate, cyclohexylmethacrylate, decylacrylate, decylmethacrylate, octadecylacrylate, octadecylmethacrylate, hydroxyethylacrylate, hydroxyetylmethacrylate, methoxyethylacrylate, methoxyethylmethacrylate, glycidylacrylate and glycidylmethacrylate.

The maleimide copolymeric resin used as the thermoplastic resin (b) may comprise, for example, 5 to 50 mol % of maleimide monomer, 30 to 90 mol% of aromatic vinyl monomer, 0 to 50 mol%, of unsaturated dicarboxylic anhydride monomer and 0 to 50 mol% of other copolymerizable monomers. With more than 90 mol%, of aromatic vinyl monomer, Tg of the maleimide copolymeric resin will be undesirably reduced. With more than 50 mol% of the maleimide monomer or of the unsaturated dicarboxylic anhydride it is difficult to manufacture homogeneous copolymeric resin industrially. It is also undesirable for there to be more than 50 mol% of the other copolymerizable monomer because the Tg of the maleimide copolymeric resin is then reduced and the heat stability of the composition is reduced.

The maleimide copolymeric resin can be made by well-known free-radical polymerization techniques. Another method of producing the maleimide copolymeric resin comprises reacting the copolymer of the unsaturated dicarboxylic acid anhydride monomer, the aromatic vinyl monomer and, if required, another copolymerizable monomer group with ammonia or a primary amine to make all or part of the anhydride groups thereof into imides. The maleimide copolymeric resin can be manufactured by this reaction according to methods disclosed in, for example, JP-A-61-26938 and JP-A-62-8456.

The maleimide copolymeric resin used in the present invention has a Tg which is 10°C higher than, and more preferably 20°C higher than, that of the thermoplastic polyester resin (a). If the Tg of the maleimide copolymeric resin is equal to or lower than that of the thermoplastic polyester resin the drawing of the film made of their composition will cause plastic deformation of the maleimide copolymeric resin therein and insufficient fine irregularities on the surface of the film will be generated. With the maleimide copolymeric resin having such lower Tg, the resulting polyester film has insufficient lubricity.

There is no restriction on the molecular weight of the maleimide copolymeric resin, provided that a melt viscosity of 50 to 5000 Pas (500 to 50,000 poise) can be obtained at a temperature of 280°C and a shear speed of 10²sec⁻¹.

When amorphous polyolefin is used as the thermoplastic resin (b), its Tg is typically at least 10°C higher than that of the thermoplastic polyester resin (a). Examples include a copolymer of norbornene/ethylene, a hydrogenate of ring opening polymer of dicyclopentadiene, random copolymers of ethylene/1,4,5,8-dimethano-1,2,3,4,4a,5,8,8a-octahydronaphthalenes (for example,
ethylene/2-ethyl-1,4,5,8-dimethano-1,2,3,4,4a,5,8,8a-octahydronaphthalene,
ethylene/2-methyl-1,4,5,8-dimethano-1,2,3,4,4a,5,8,8a-octahydronaphthalene,
ethylene/2-propyl-1,4,5,8-dimethano-1,2,3,4,4a,5,8,8a-octahydronaphthalene,
ethylene/2-hexyl-1,4,5,8-dimethano-1,2,3,4,4a,5,8,8a-octahydronaphthalene,
ethylene/2-stearyl-1,4,5,8-dimethano-1,2,3,4,4a,5,8,8a-octahydronaphthalene,
ethylene/2,3-dimethyl-1,4,5,8-dimethano-1,2,3,4,4a,5,8,8a-octahydronaphthalene,
ethylene/2-methyl-3-ethyl-1,4,5,8-dimethano-1,2,3,4,4a,5,8,8a-octahydronaphthalene,
ethylene/2-chloro-1,4,5,8-dimethano-1,2,3,4,4a,5,8,8a-octahydronaphthalene,
ethylene/2-bromo-1,4,5,8-dimethano-1,2,3,4,4a,5,8,8a-octahydronaphthalene,
ethylene/2-fluoro-1,4,5,8-dimethano-1,2,3,4,4a,5,8,8a-octahydronaphthalene,
and ethylene/2,3-dichloro-1,4,5,8,8-dimethano-1,2,3,4,4a,5,8,8a-octahydronaphthalene) and copolymers of ethylene and at least one cyclic olefin selected from a group including cycloalkene and tricycloalkene (for example, bicyclo[2.2.1]hepto-2-ene,
6-methylbicyclo[2.2.1]hepto-2-ene,
5,6-dimethylbicyclo[2.2.1]hepto-2-ene,
1-methylbicyclo[2.2.1]hepto-2-ene,
6-ethylbicyclo[2.2.1]hepto-2-ene,
6-n-butylbicyclo[2.2.1]hepto-2-ene,
6-i-butylbicyclo[2.2.1]hepto-2-ene,
7-methylbicyclo[2.2.1]hepto-2-ene,
tricyclo[4.3.0.1^{2,5}]-3-decene,
2-methyltricyclo[4.3.0.1^{2,5}]-3-decene,
5-methyltricyclo[4.3.0.1^{2,5}]-3-decene,
tricyclo[4.4.0.1^{2,5}]-3-decene,
and 10-methyltricyclo[4.4.1.1^{2,5}]-3-decene).

The amorphous polyolefin used in the present invention is typically a copolymer of ethylene and an above-mentioned cyclic olefin. The content of the cyclic olefin component in the copolymer is generally more than 10 mol% and less than 60 mol%, and that of the ethylene component is generally more than 40 mol% and less than 90 mol%. Other copolymerizable unsaturated monomer components may be copolymerized with these two components to the extent that the object of the present invention can be achieved. Such copolymerizable unsaturated monomers include, for example, C₃-C₂₀ α-olefins such as propylene, 1-butene, 4-methylpentene-1, 1-hexene, 1-octene, 1-decene, 1-dodecene, 1-tetradecene, 1-hexadecene, 1-octadecene, and 1-eicosene, cyclopentene, cyclohexene, 3-methylcyclohexene, cyclooctene, 1,4-hexadiene, 4-methyl-1-hexadiene, 5-methyl-1,4-hexadiene, 1,7-octadiene, dicyclopentadiene, 5-ethylidene-2-norbornene, 5-vinyl-2-norbornene, tetracyclodecene, 2-methyltetracyclodecene, and 2-ethyltetracyclododecene.

The copolymer may be made with a liquid phase polymerization method. The cyclic olefin copolymer can be obtained by a method disclosed in, for example, JP-A-61-271308.

The amorphous polyolefin used in the present invention has a Tg which is at least 10°C higher, and preferably at least 20°C higher, than the Tg of the thermoplastic polyester resin (a). If Tg of the amorphous polyolefin is equal to or lower than that of the thermoplastic polyester resin, the drawing of the film made of their composition will cause plastic deformation of the amorphous polyolefin and insufficient fine irregularities on the surface of the film will be generated.

There is no restriction on the molecular weight of the amorphous polyolefin provided that a melt viscosity of 50 to 5000 Pas (500 to 50,000 poise) can be obtained at a temperature of 280°C and a shear rate of 10²sec⁻¹.

The particulate inert materials of inorganic compound (c) are added to the film at any time. However, it is more effective to add them during the esterification process or the substantial polycondensation. It is also possible to directly incorporate these particulate inert materials of inorganic compound into the thermoplastic polyester resin (a) with no particulate inert materials of inorganic compound and mix them into a resin to be made into a film. However, such a method requires the particulate inert materials of inorganic compound (c) to be uniformly dispersed in the thermoplastic polyester resin (a).

In order to sufficiently disperse the particulate inert materials of inorganic compound (c) in the thermoplastic polyester resin (a), the particles should be ground into primary particles using well-known devices such as an agitator, a sand mill, or a high-pressure dispersing machine. It is understood that a well-known polymerization method is preferably applied such that the particles are prevented from aggregating or agglomerating with each other in the thermoplastic polyester resin (a) or that a dispersing agent should be added.

In addition, in order to improve the adhesive properties of the thermoplastic polyester resin and to prevent the occurrence of voids, the surface of the particulate inert materials of inorganic compound (c) may be pre-treated. In this event, it is possible to use both chemical treatment such as treatment with silane coupling agent and a method applying to coating of acrylic compounds such as acrylic acid and acrylic ester and physical treatment such as corona (discharge) treatment.

Preferably, the average particle size of the particulate inert materials of inorganic compound (c) used in the present invention is from 0.2 to 4.0 µm, and more preferably, from 1.0 to 3.5 µm. The particulate inert materials of inorganic compound (c) having an average particle size of smaller than 0.2 µm will not effectively improve the lubricity of the film. On the other hand, an average particle size of larger than 4.0 µm serves to degrade the film appearance into an unclear or opaque film, since the appearance of the particles is closely related to size. In addition, the refractive index of the particulate inert materials of inorganic compound (c) is preferably from 1.40 to 1.68. If the refractive index is less than 1.40, which is significantly different from the refractive index of the polyester matrices, the transparency of the film decreases because of high reflection and refraction of light at interfaces between dispersed particles and polyester resin matrices. The transparency of the film is improved as the refractive index approaches 1.68, which is approximately the refractive index of the drawn polyester film. The following minerals are examples of the inorganic compound (c) : silica, calcium carbonate, alumina, talc, kaolin, zeolite, and alumino-silicate. The only important factor is the particle size.

The amount of the particulate inert materials of inorganic compound (c) used in this invention is preferably from 0.0001 to 0.1 wt.%, and more preferably, 0.0001 to 0.05 wt.%, of the composition to be formed into a film.

It is preferable that the surface roughness SRa of the surface-roughened film is from 0.001 to 0.2 µm, preferably 0.007 to 0.07 µm, and that SRz is from 0.1 to 2.0 µm, preferably 0.1 to 0.5 µm. The lubricity is insufficient when SRa is smaller than 0.001 µm and SRz is smaller than 0.1 µm, while the transparency of the film is insufficient when SRa is larger than 0.2 µm and SRz is larger than 2.0 µm.

The surface-roughened film according to the present invention may include, besides the particulate inert inorganic compound (c), well-known organic slip agents, lubricants, antioxidants, anti-weathering agents, flame retardants, antistatic agents, and some colorants to such a degree that the object of the present invention can be achieved.

The volume of the thermoplastic resin (b) used for the surface-roughened film according to this invention is from 0.01 to 3.0 wt % of the composition to be made into a film, preferably from 0.05 to 0.5 wt %. This amount of thermoplastic resin (b) applied to the thermoplastic polyester rein (a) can be controlled on a submicron scale (i.e. smaller than 1 µm) due to shearing stress when being melted and mixed in a single or twin screw extruder.

One or more different thermoplastic resins (b) can be incorporated in the thermoplastic polyester resin (a). However, advantageous effects are obtained when the amount of the particulate inert materials of inorganic compound (c) is from 0.0001 to 0.1 wt. %, more preferably, 0.0001 to 0.05 wt. % coexistent with the thermoplastic resin (b).

The surface-roughened films of the present invention is a single-layer film comprising a composition containing the thermoplastic polyester resin (a), the thermoplastic resin (b) which is an amorphous nylon, an amorphous polyolefin or a maleimide copolymeric resin and the particulate inert materials of inorganic compound (c). This film may be laminated with other polymers. In case of the laminated film, the layer made of the composition is laminated with other polymers so that it forms the surface layer of one or both sides of the film. Such a film is advantageous in that it is economic and the transparency of the film is improved. Examples of the "other polymers" include thermoplastic polyester resins such as PET, PBT, PEN, and PCT selected from the examples specified above for the thermoplastic polyester resin (a).

The surface-roughened film of the present invention is made by drawing an undrawn film comprising the composition of the thermoplastic polyester resin (a), the thermoplastic resin (b), and the particulate inert materials of inorganic compound (c), or by drawing an undrawn laminate-film with the layer made of the composition and the other polymer layer at a temperature between Tg of the resins (a) and (b). More particularly, the method comprises fusing and mixing, in a single or twin screw extruder, the thermoplastic polyester resin (a), the thermoplastic resin (b), and the particulate inert materials of inorganic compound (c) to cause a fine dispersion of the thermoplastic resin (b) in the thermoplastic polyester resin (a). The resulting composition alone or with other polymers, if being laminated, is melt extruded into a film by using a T-die or a circular die to cool with a casting roll or cooling liquid/air. The resulting undrawn film has relatively smooth surfaces, which becomes irregular by being drawn. In this event, it is required that the drawing temperature is between Tg of the thermoplastic polyester resin (a) and Tg of the thermoplastic resin (b). The drawing is not effective at a temperature lower than Tg of the thermoplastic polyester resin (a), while the desired surface irregularities do not readily occur at a temperature higher than Tg of the thermoplastic resin (b). A draw ratio is a factor of one and a half or more in both longitudinal and transversal directions (i.e. machine and cross directions) for uniaxial drawing. Biaxial drawing is desirable where a better film can be obtained. In this event, it is desirable to draw the film by not less than a factor of one and half, and preferably, by not less than a factor of three in both longitudinal and transversal directions.

Any drawing method can be used such as uniaxial drawing, sequential biaxial drawing, and simultaneous biaxial drawing. In addition, various types of drawing machines can be used such as a twin roll uniaxial drawing machine, a tenter transversal drawing machine, simultaneous biaxial drawing machine, or a tubular simultaneous biaxial drawing machine.

When the particulate inert materials of inorganic compound (c) provide the only anti-blocking agents, the haze (Hz) of a well-transparent film is from 0.3 to 2.5 %. However, a film of the type described tends to cause protuberances on a rolled film upon rolling up the film due to a static friction coefficient by a line press method of more than 2.5, which is a defect in that a well-rolled film is not readily obtained.

In the surface-roughened film of the present invention, Hz of the film thickness converted value is, as a 100 µm converted value, 0.3 to 2.5 %, the static friction coefficient by a line press method (µs-2) under loading of 1,000 g/cm is less than 2.4, and the gloss rate (G%) is 180 to 250 %.

The surface-roughened film can be manufactured with the addition of synthetic organic resins, which is difficult using conventional methods. Such a film has considerable versatility in various industries owing to its working properties, mechanical properties, lubricity and transparency of the resultant film.

The surface-roughened film of the present invention is useful for photoengraving materials, labels, wrapping films, magnetic recording films and clear films or other products.

The invention will be further illustrated in the Reference Example and Examples which follow.

### Reference Example

### Thermoplastic polyester resin

A thermoplastic polyester resin (a) is given in the following Table 1.

**TABLE 1**

| Thermoplastic polyester resin | Intrinsic Viscosity [η] | Critical Surface Tension (dyne/cm) | Tg (°C) |
|---|---|---|---|
| A-1 Polyethylene terephthalate | 0.78 | 41 | 70 |
| A-2 Polyethylene naphthalate | 0.70 | 38 | 120 |

### Synthesis of amorphous nylon

Prepared in a reactor was a raw material of 10 kg containing 1,3-benzenedicarboxylic acid (isophthalic acid) of 45 mol%, 1,4-benzenedicarboxylic acid (terephthalic acid) of 5 mol%, hexamethylene diamine of 45 mol%, bis(4-amino-3-methylcyclohexyl) methane of 5 mol% and acetic acid of 0.015 mol% with pure water of 8 kg to purge the air within the reactor by using nitrogen. The temperature was raised up to 90°C to react for about five hours, then the reaction temperature was gradually raised up to 280°C for over ten hours under pressure (18 bar) agitating in the reactor. The pressure was decreased to atmospheric pressure to polymerize for six hours at the same temperature. After the reaction, nylons were taken from the reactor to be cut into pellets. The relative viscosity of this nylon (B-1), measured at a level of 1g/dl in m-cresol at a temperature of 20°C, was 1.50 and Tg was 150°C.

The other amorphous nylons were polymerized in the same manner. The result is shown in Table 2.

**TABLE 2**

| | 1 | 2 | 3 | 4 | 5 | 6 | 7 | 8 | Melt Viscosity (poise) | Tg (°C) |
|---|---|---|---|---|---|---|---|---|---|---|
| B-1 | 45 | 5 | 45 | 5 | - | - | - | - | 2600 | 150 |
| B-2 | 15.5 | 32 | 29 | - | - | 5 | 18.5 | - | 2500 | 167 |
| B-3 | 50 | - | - | - | - | - | - | 50 | 5000 | 177 |
| B-4 | 45 | - | 45 | 5 | 5 | - | - | - | 2000 | 118 |
| B-5 | 45 | 5 | 45 | 5 | - | - | - | - | 450 | 150 |
| 1...isophthalic acid | | | | | | | | | | |
| 2...terephthalic acid | | | | | | | | | | |
| 3...hyxamethylenediamine | | | | | | | | | | |
| 4...bis(4-amino-3-methylcyclohexyl)methane | | | | | | | | | | |
| 5...sebacic acid | | | | | | | | | | |
| 6...caprolactam | | | | | | | | | | |
| 7...3-aminomethyl-3,5,5-trimethylcyclohexylamine | | | | | | | | | | |
| 8...methaxylenediamine | | | | | | | | | | |

### Synthesis of maleimide copolymeric resin

Approximately 100 parts of stylene, approximately 67 parts of maleic anhydride, 0.2 parts of benzoyl peroxide, and 300 parts of methyl ethyl ketone (MEK) were reacted in nitrogen atmosphere for 10 hours at a temperature of 80°C. The resultant polymer was added with 1.2 parts of triethylamine and 46.2 parts of aniline and reacted for 6 hours at a temperature of 130 °C to obtain the maleimide copolymeric resin (C-3). Other maleimide polymeric resins were made in the same manner. The result is given in Table 3.

**TABLE 3**

| Copolymer | | Monomer Composition (mol%) | | | | |
|---|---|---|---|---|---|---|
| | Aromatic vinyl monomer | maleimide monomer | unsaturated dicarboxylic acid | Other Monomers∗(°C) | Tg | Melt Viscosity (poise) |
| C-1 | ST 30 | NPM 50 | | MMA 20 | 200 | 11000 |
| 2 | ST 50 | NPM 5 | MAH 45 | | 203 | 12000 |
| 3 | ST 60 | NPM 40 | | | 197 | 9000 |
| 4 | ST 50 | NPM 30 | MAH 20 | | 203 | 12000 |
| 5 | ST 40 | NPM 60 | | | - | - |
| 6 | ST 90 | NPM 10 | | | 120 | 2500 |
| 7 | ST 30 | NPM 10 | MAH 60 | | - | - |
| 8 | ST 10 | NPM 30 | | MMA 60 | - | - |
| 9 | ST 95 | | MAH 5 | | 90 | 2300 |
| 10 | VT 50 | NPM 50 | | | 203 | 12000 |
| 11 | ST 50 | NTM 50 | | | 203 | 12000 |
| 12 | ST 60 | NPM 40 | | | 198 | 55000 |
| ST :stylene | | | | | | |
| VT :vinyltoluene | | | | | | |
| NPM:N-phenylmaleimide | | | | | | |
| NTM:N-tolylmaleimide | | | | | | |
| MAH:maleic anhydride | | | | | | |
| MMA:methyl methacrylate | | | | | | |

| | | | | | | |
|---|---|---|---|---|---|---|
| ∗ = copolymerizable monomers | | | | | | |

### Synthesis of amorphous polyolefin

To 6-ethylbicyclo[2.2.1]hepto-2-ene -2-ene of 60g and one liter of toluene, a vanadium compound of VO(OC₂H₅)Cl₂ and ethylaluminium sesquichloride were added with the ratio of 1 mmol per liter and 4 mmol per liter, respectively, in the prepared composition to be reacted. 40 liters of ethylene per hour and 80 liters of nitrogen per hour was provided to the reactor to react the composition therein. The copolymerization were continuously conducted at a temperature of 10°C. Subsequently, a little amount of methanol was added to inhibit polymerization. A ring olefin copolymer (D) was obtained by percipitating the aimed amorphous polyolefin using a large amount of acetone/methanol. The resultant copolymer and its properties are shown in Table 4 below.

**TABLE 4**

| Copolymer | Cyclic olefin | Ethylene contents in Cyclic olefin copolymer (mol%) | Melt Viscosity (poise) | Tg °C |
|---|---|---|---|---|
| D | 6-ethylbicyclo [2.2.1]hepto-2-ene | 62 | 2500 | 100 |

Measuring devices and methods used in this embodiment are as follows:

### Dispersed particle diameter

The dispersed particle diameter was determined from an electron micrograph of sample rupture cross-section by using a scanning electron microscope JSM-15, obtained from the JEOL Ltd

### Surface roughness

It was determined in accordance with the method defined in JIS B 0601 (1976) using a surface roughness tester obtained from the KOSAKA Co. Ltd. with a spylus of 2µmR in radius, 10mg in pressure, and at a 50,000 height magnification.

### (Haze, Hz)

It was determined in accordance with ASTM D1003-61 using a Haze meter available from the TOKYO DENSHOKU Co. Ltd.

### (Friction coefficient)

Using a friction meter sold by the Shinto Kagaku Ltd. under the name of HEIDON-14S/DR, a static friction coefficient by plane press method (µs-1) was measured with a flat shape indenter of 3x3cm² and the static friction coefficient by line press method (µs-2) was measured with a straight shape indenter of 15mm in radius and 10mm in length. They were measured under the condition where loading was lkg and the moving speed of 150 mm/min.

### (Refraction Index)

Measured in film of 250 µm in thickness by using an Abbe's refractometer IT sold by the ATAGO Ltd.

### (Clitical Surface Tension)

Measured at a temperature of 20°C and a relative humidity (RH) of 50% using an automatic contact angle meter CA-Z by the Kyowa Interface Science Co. Ltd.

### (G%)

The Gloss rate at an angle of incidence to the film of 20 degree was measured using a gloss meter GM-30 sold by the Murakami Color research Laboratory Ltd.

### Melt Viscosity

It was measured using a flow tester CFT-500 sold by Shimadzu Corp. with an orifice of 0.5 mmΦ in diameter and 2mm in height at a temperature of 280°C.
(Evaluation for protuberances: the number of protuberances on the surface of 1,000m wind roll having a width of 1m)

Meaning of the symbols are:
×: protuberances were found under the condition that contact pressure of 10kg/m and tension of 10kg/m on film slitting;
○: no protuberances were found under the condition that contact pressure of 10kg/m and tension of 10kg/m on film slitting and less than five protuberances were found under the condition that contact pressure of 20kg/m and tension of 20kg/m; and
ⓞ: no protuberances were found under both conditions that contact pressure of 10kg/m and tension of 10kg/m and that contact pressure of 20kg/m and tension of 20kg/m.

### Preparation of drawn films

The thermoplastic polyester resin (A-1) of 95 wt.% and amorphous nylons (B-1 to B-3) of 5wt.% were melt and blend into pellets at a temperature of 280°C using a biaxial kneading extruder. Thereafter, the resultant pellets and the thermoplastic (A-1) were formulated under the additive ratios shown below in Table 5 by means of two-kinds-three-layer T-die using two extruders of 50mmΦ and 65mmΦ. A three-layer laminated polyester film having thickness of 700 µm were obtained, where the mixed pellets were formed as outer layers (56 µm x 2) and PET (A-1) was formed as an inner layer (58 µm). In order to measure the diameter of particles of the thermoplastic resin dispersed in the undrawn film, the size were determined from an electron micrograph of the rupture cross-section of a sample obtained by exposeing the undrawn film to frost-rupture in liquid nitrogen along takeup direction or machine direction (MD) of the film. The undrawn film was then drawn in longitudinal direction (machine direction) by a factor of three and half using a longitudinal drawing roll at a temperature of 90°C and succeedingly drawn in transversal direction (cross-direction) by a factor of four using a transversal tenter drawing machine at a raised temperature of 120°C.

Formulations , properties of the thermoplastic resin, dispersed particle diameters of the thermoplastic resin and properties of the drawn films are shown in Tables 5 to 8. It is clear from these tables that the film fabricated in accordance with the present invention exhibits superior surface roughness, haze, static friction coefficient by line press method, and protuberance free surface when compared to controls, with respect to contents, the clitical surface tension and the melt viscosity defined by the present invention,and to a preferred specific condition of the refractive index and the dispersed particle diameter.

### Control 1

The thermoplastic polyester resin A-2 and the thermoplastic resin B-4 were pelletized after being kneaded in the same formulation as described in the Reference Example. Thereafter, the undrawn film was obtained in the same manner as described in the Reference Example using the thermoplastic polyester resin A-2 for the inner layer. The film was drawn under the same condition as described in the Reference Example except that the drawing temperature for the longitudinal roll was 130°C and that for the transversal tenter extruder was 150°C. The properties of the drawn film are shown in Table 7. It can be seen from Table 7 that thermoplastic resins having Tg of lower than that of the thermoplastic polyester resin exhibited high transparency whereas the lubricity was not preferred and some protuberances were found.

### Control 2

The drawn film was prepared in the same manner as described in the Reference Example except that a nylon6 (Tg of 45 °C) was used as the thermoplastic resin.

Like the foregoing control 1, thermoplastic resins having Tg of lower than that of the thermoplastic polyester was used resulting the high transparency, whereas the lubricity was not preferred and some protuberances were found.

### Controls 3 to 5

The drawn film was prepared in the same manner as described in the Reference Example with the thermoplastic polyester resin and the thermoplastic resin as set forth in Table 5 in accordance with the ratio as set forth in Table 5. The result is shown in Table 7. It was found that the resultant film inevitably exhibited excessive haze under the condition that the contents and the melt viscosity of the thermoplastic resin was over the range defined by the present invention, while only the film having protuberances on its surface was obtained even when the haze was lower than 2.5%.

### Controls 6 to 8

Silica SY-150 sold by Nippon Shokubai Co.Ltd. was added to the thermoplastic polyester resin (A) on its polymerization and a silica master pellet was substituted for the thermoplastic resin (b) as described in the Reference Example to obtain the drawn film in the same manner as described in the Reference Example. The processing conditions are given in Table 5 and the results in Table 7.

It was found from these controls that the film of high quality was not obtained because protuberances were generated on the surface of the film roll or the haze were higher than 2.5 %.

### Examples 1 to 7

The drawn film was fabricated as described in the Reference Example except that the silica set forth in Tables 5 and 6 was added at a concentration set forth in Tables 5 and 6 with a preformed master pellet. The results are shown in Tables 7 and 8. It was found that advantageous effects and superior results were obtained by means of coexisting the thermoplastic resin and the particulate inert materials of inorganic compound at the volume defined by the present invention in the thermoplastic polyester resin.

### Control 9

The same processing was made as in Example 1 besides that the silica having the larger particle diameter than that defined by the present invention as shown in Tables 6 and 8. As a result, it was found that the film exhibited lower transparency as well as good lubricity when being coexisted with the thermoplastic resin (b) defined by the present invention.

### Control 10

The same processing was made as in Example 1 besides that the thermoplastic resin having the Tg as shown in Tables 6 and 8. As a result, it was found that the film exhibited disadvantageous lubricity as well as high transparency of the film and some protuberances were generated when being coexisted with the silica defined by the present invention.

### Examples 8 and 9

Tables 6 and 8 shows that the transparency and the lubricity of the film was not affected by using the maleimide copolymeric resin and the amorphous polyolefin as the thermoplastic resin (b).

### Control 11

The film was prepared in the same manner as Example 1 besides that the drawing was made only with the longitudinal drawing roll for 1.4 times. Some protuberances were found on the film surface.

### Control 12

The same processing was made as described in the Reference Example besides that the maleimide copolymeric resin (C-12) having the melt viscosity greater than that defined by the present invention was used as the thermoplastic resin (b). As a result, it was found that the transparency of the film was degraded with the particles of larger particle diameter.

### Control 13

The same processing was made as Example 1 besides that the silica of 0.1 µm in diameter. As a result, it was found that the particulate inert materials of inorganic compound had a diameter smaller than the range defined by the present invention. This shows it is not effective to add the particulate inert materials of inorganic compound.

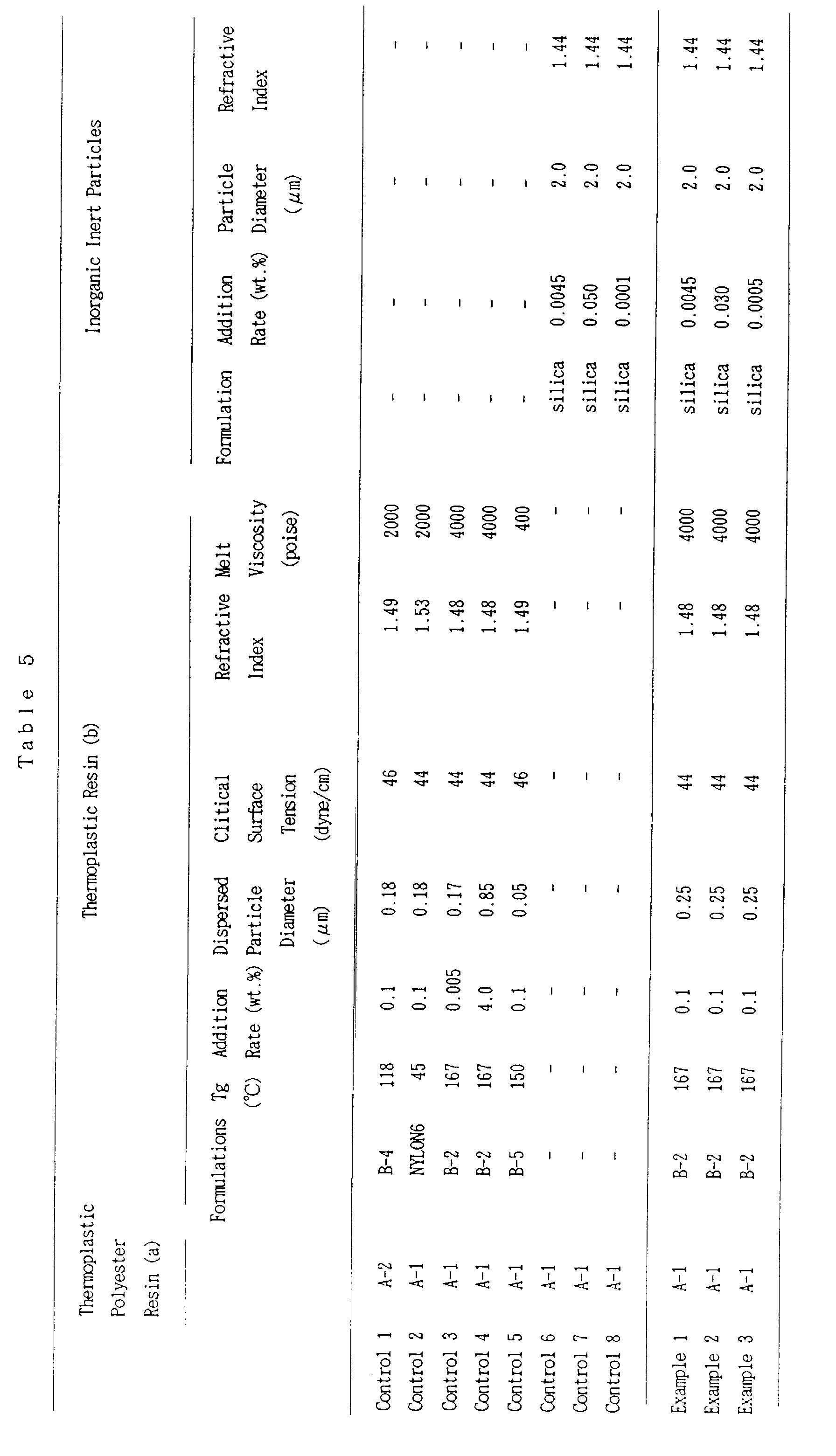

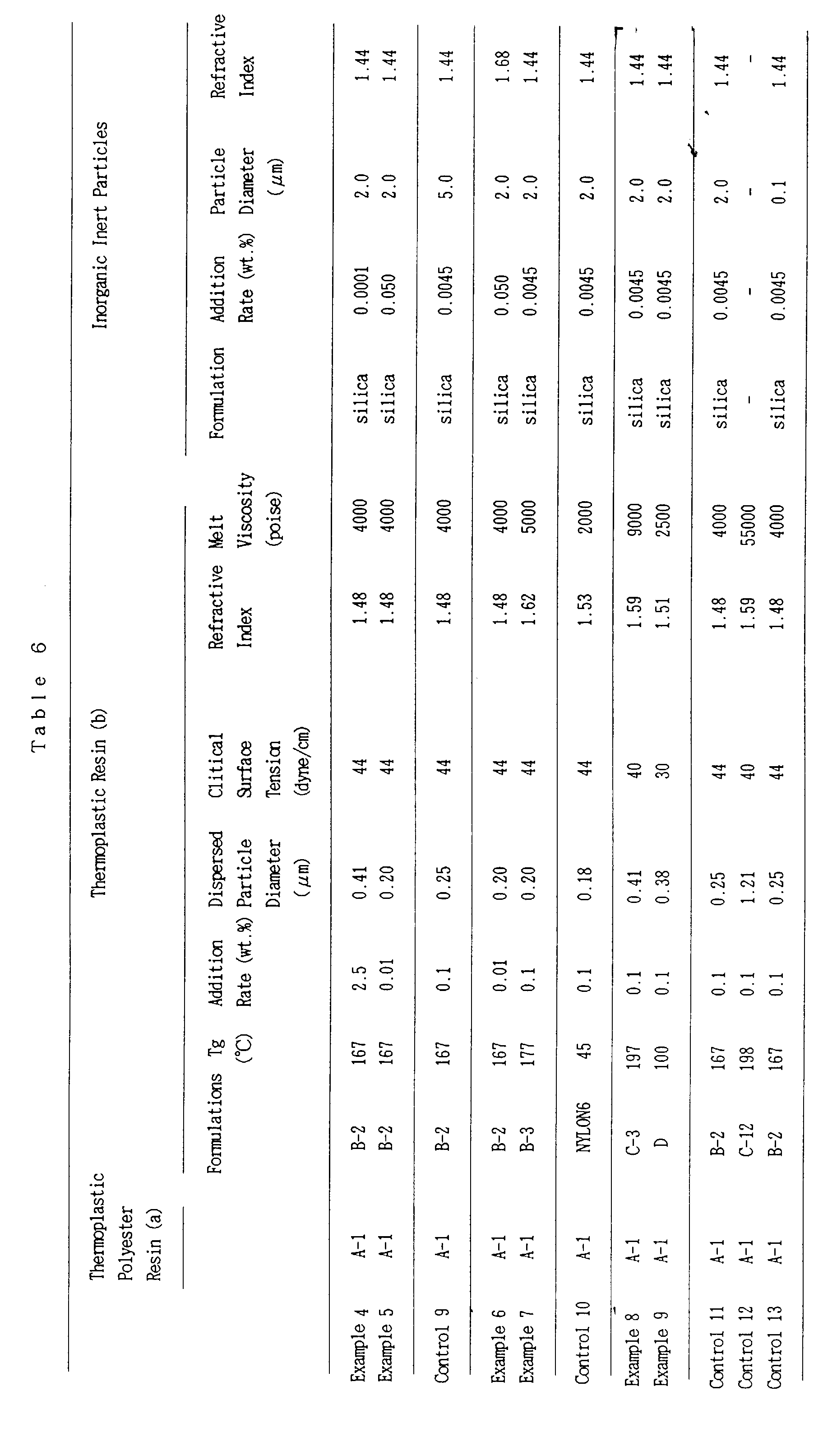

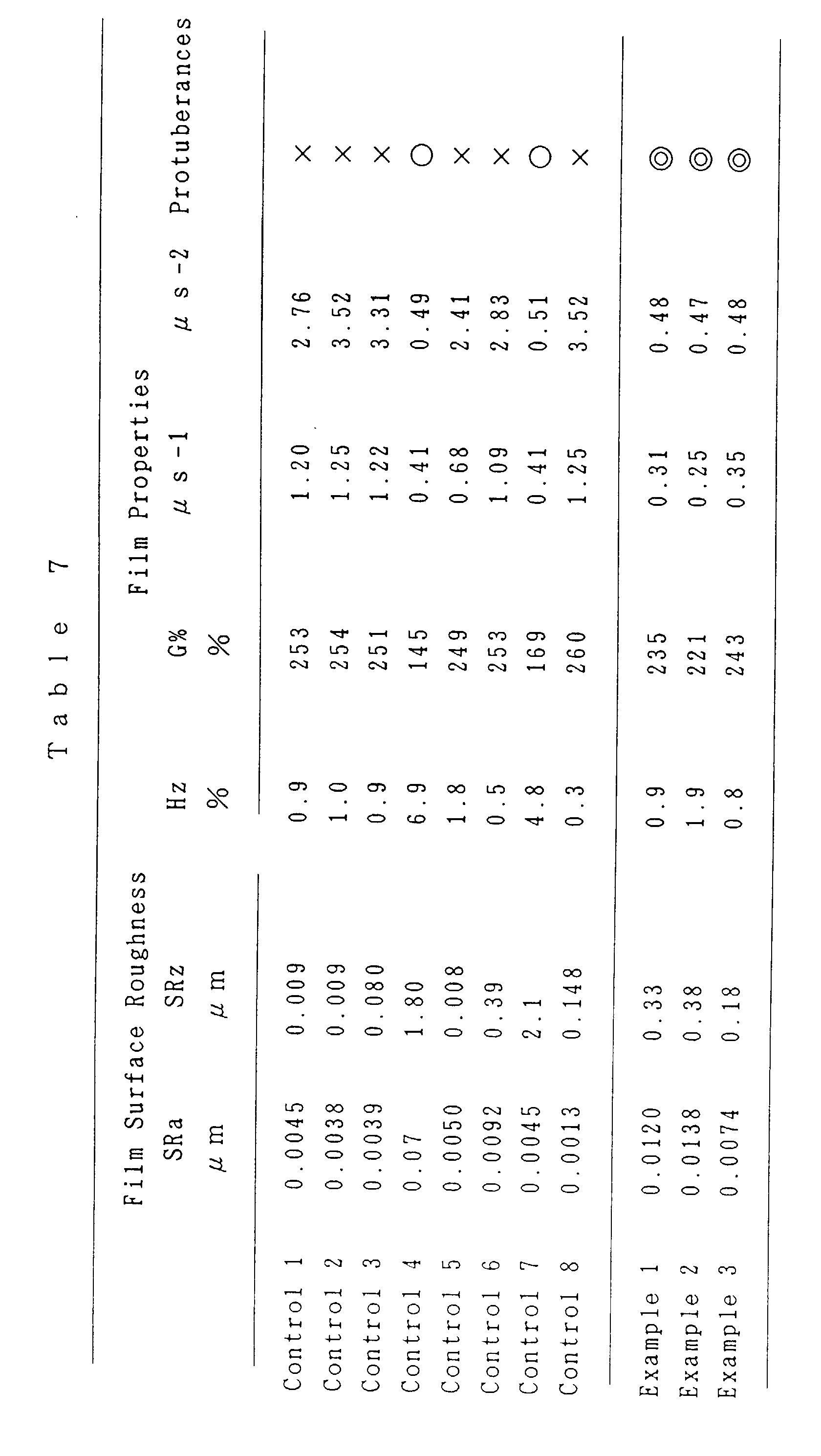

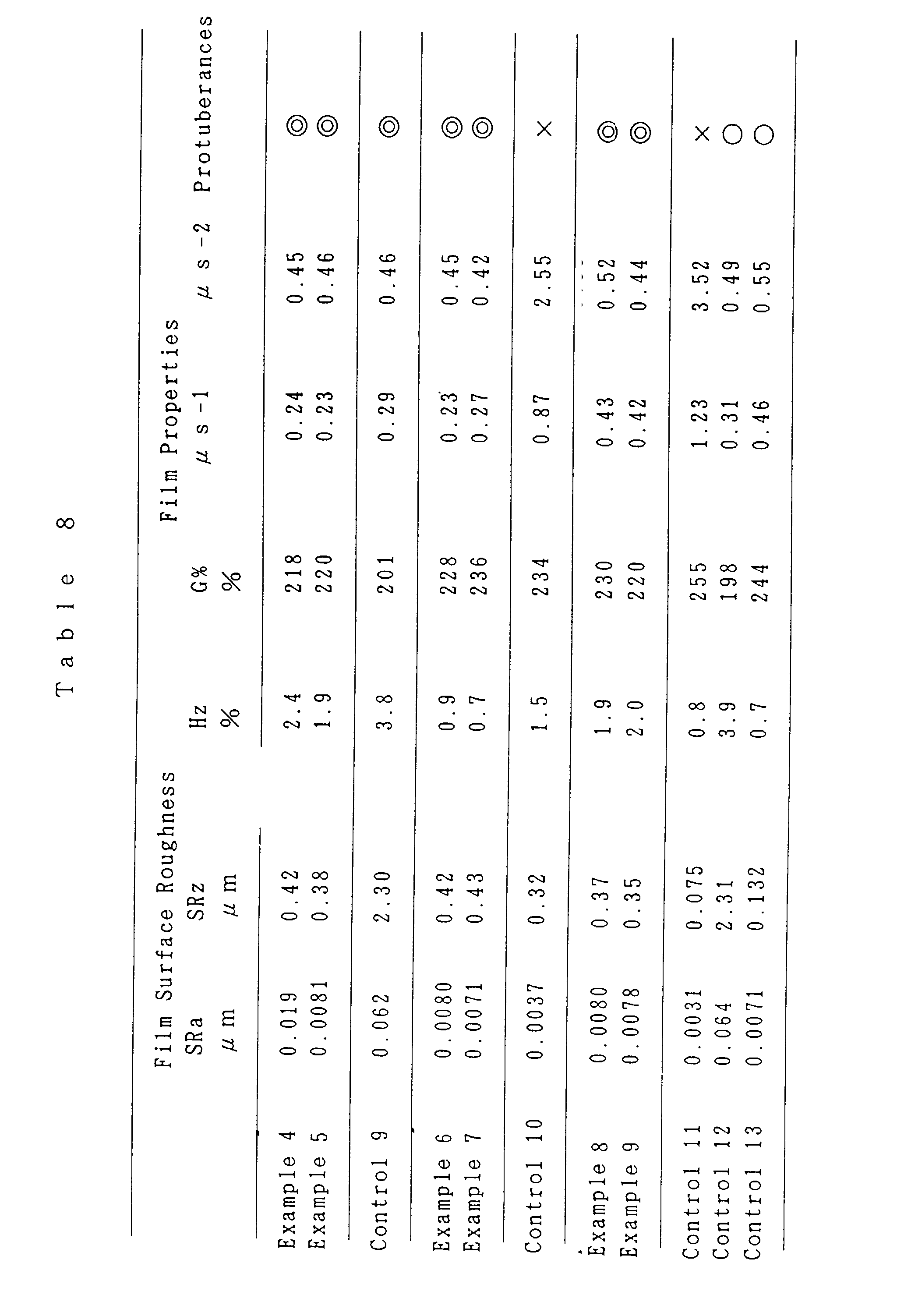

## Claims

1. A surface-roughened film of a composition (I) containing 96.9 to 99.9899 wt.% of a thermoplastic polyester resin (a), 0.01 to 3 wt.% of a thermoplastic resin (b) which is an amorphous nylon, an amorphous polyolefin or a maleimide copolymeric resin and which has a glass transition temperature higher than that of staid thermoplastic polyester resin (a), a critical surface tension which differs by more than 0.1 dyne/cm from that of said thermoplastic polyester resin (a), a melt viscosity at a temperature of 280°C and shear rate of 10² sec⁻¹, of 50 to 5000 Pas (500 to 50,000 poise), and 0.0001 to 0.1 wt.% of particles of an inorganic compound (c) having an average particle size of 0.2 to 4.0 µm, said film having microprotuberances cored with said thermoplastic resin (b) on a surface of said film.

2. A film according to claim 1, wherein said inorganic compound (c) is silica.

3. A film according to claim 1 or 2, wherein the three dimensional center plane average roughness (SRa) of said surface is from 0.007 to 0.07 µm, and the three dimensional ten point average roughness (SRz) is from 0.1 to 0.5 µm.

4. A film according to any one of claims 1 to 3 wherein the refractive index of said thermoplastic resin (b) is from 1.45 to 1.68.

5. A film according to any one of claims 1 to 4 wherein the mean dispersed particle size of said thermoplastic resin (b) is from 0.01 to 1.0 µm.

6. A laminate comprising at least one surface-roughened film as claimed in any one of the preceding claims, with said surface on an outer surface of the laminate, and at least one film of another polymer.

7. A laminate according to claim 6 wherein said another polymer is a thermoplastic polyester resin.

8. A method for fabricating a surface-roughened film as claimed in any one of claims 1 to 5 which comprises drawing an undrawn film of a composition (I) or (II) by at least 1.5X in at least one direction at a temperature between the glass transition temperatures of the resins (a) and (b).

9. A method according to claim 8 wherein the drawing ratio is higher than 3X in both axial directions.

## Patentansprüche

1. Film mit aufgerauhter Oberfläche einer Zusammensetzung (I), enthaltend 96,9 bis 99,9899 Gew.-% eines thermoplastischen Polyesterharzes (a), 0,01 bis 3 Gew.-% eines thermoplastischen Harzes (b), welches ein amorpher Nylon, ein amorphes Polyolefin oder ein Maleimid-Copolymerharz ist und welches eine Glasübergangstemperatur aufweist, die höher als die des thermoplastischen Polyesterharzes (a) ist, eine kritische Oberflächenspannung, die um mehr als 0,1 Dyn/cm von der des thermoplastischen Polyesterharzes (a) abweicht, eine Schmelzviskosität bei einer Temperatur von 280°C und Schergeschwindigkeit von 10² Sek.⁻¹ von 50 bis 5.000 Pas (500 bis 50.000 Poise), und 0,0001 bis 0,1 Gew.-% an Teilchen einer anorganischen Verbindung (c) mit einer durchschnittlichen Teilchengröße von 0,2 bis 4,0 µm, wobei dieser Film mit dem thermoplastischen Harz (b) ausgefüllte Mikrorauhigkeitsspitzen auf einer Oberfläche dieses Films aufweist.

2. Film nach Anspruch 1, wobei diese anorganische Verbindung (c) Siliciumdioxid ist.

3. Film nach Anspruch 1 oder 2, wobei die mittlere Rauheit der dreidimensionalen Zentralebene (SRa) dieser Oberfläche 0,007 bis 0,07 µm und die aus zehn dreidimensionalen Punkten gemittelte Rauheit (SRz) 0,1 bis 0,5 µm beträgt.

4. Film nach einem der Ansprüche 1 bis 3, wobei der Brechungsindex des thermoplastischen Harzes (b) 1,45 bis 1,68 beträgt.

5. Film nach einem der Ansprüche 1 bis 4, wobei die mittlere dispergierte Teilchengröße des thermoplastischen Harzes (b) 0,01 bis 1,0 µm beträgt.

6. Laminat, umfassend mindestens einen Film mit aufgerauhter Oberfläche nach einem der vorangehenden Ansprüche, wobei diese Oberfläche sich auf einer Außenseite des Laminats befindet, und mindestens einen Film aus einem anderen Polymer.

7. Laminat nach Anspruch 6, wobei dieses andere Polymer ein thermoplastisches Polyesterharz ist.

8. Verfahren zur Herstellung eines Films mit aufgerauhter Oberfläche nach einem der Ansprüche 1 bis 5, welches das Recken eines ungereckten Films einer Zusammensetzung (I) oder (II) um mindestens das 1,5-fache in mindestens eine Richtung bei einer zwischen den Glasübergangstemperaturen der Harze (a) und (b) liegenden Temperatur umfaßt.

9. Verfahren nach Anspruch 8, wobei das Reckverhältnis mehr als das 3-fache in beide Achsenrichtungen ist.

## Revendications

1. Film à surface rendue rugueuse d'une composition (I) contenant 96,9 à 99,9899 % en poids d'une résine polyester thermoplastique (a), 0,01 à 3 % en poids d'une résine thermoplastique (b) qui est un nylon amorphe, une polyoléfine amorphe ou une résine copolymère de maléimide et qui a une température de transition vitreuse supérieure à celle de ladite résine polyester thermoplastique (a), une tension superficielle critique qui diffère de plus de 0,1 dyne/cm de celle de ladite résine polyester thermoplastique (a), une viscosité à l'état fondu à une température de 280 °C et à un taux de cisaillement de 10² sec⁻¹, de 50 à 5000 Pa.s (500 à 50 000 poises), et 0,0001 à 0,1 % en poids de particules d'un composé inorganique (c) ayant une taille moyenne de particules de 0,2 à 4,0 µm, ledit film ayant des microprotubérances faisant coeur avec ladite résine thermoplastique (b) sur une surface dudit film.

2. Film selon la revendication 1, dans lequel ledit composé inorganique (c) est la silice.

3. Film selon la revendication 1 ou 2, dans lequel la rugosité moyenne tridimensionnelle à partir du plan central (SRa) de ladite surface est de 0,007 à 0,07 µm, et la rugosité moyenne tridimensionnelle de dix points (SRz) est de 0,1 à 0,5 µm.

4. Film selon l'une quelconque des revendications 1 à 3, dans lequel l'indice de réfraction de ladite résine thermoplastique (b) est de 1,45 à 1,68.

5. Film selon l'une quelconque des revendications 1 à 4, dans lequel la taille moyenne des particules dispersées de ladite résine thermoplastique (b) est de 0,01 à 1,0 µm.

6. Stratifié comprenant au moins un film à surface rendue rugueuse tel que revendiqué dans l'une quelconque des revendications précédentes, avec ladite surface sur une surface extérieure du stratifié, et au moins un film d'un autre polymère.

7. Stratifié selon la revendication 6, dans lequel ledit autre polymère est une résine polyester thermoplastique.

8. Procédé pour fabriquer un film à surface rendue rugueuse tel que revendiqué dans l'une quelconque des revendications 1 à 5, qui comprend l'étape consistant à étirer un film non étiré d'une composition (I) d'au moins 1,5X dans au moins une direction à une température entre les températures de transition vitreuse des résines (a) et (b).

9. Procédé selon la revendication 8, dans lequel le rapport d'étirage est supérieur à 3X dans les deux directions axiales.
